Europäisches Patentamt

European Patent Office

Office européen des brevets

(11) Veröffentlichungsnummer: **0 360 910**
**A1**

## (12) EUROPÄISCHE PATENTANMELDUNG

(21) Anmeldenummer: 88116225.9

(22) Anmeldetag: 30.09.88

(51) Int. Cl.⁵: **H02K 5/00 , H02K 15/14**

(43) Veröffentlichungstag der Anmeldung:
**04.04.90 Patentblatt 90/14**

(84) Benannte Vertragsstaaten:
**DE FR IT**

(71) Anmelder: **Siemens Aktiengesellschaft**
**Wittelsbacherplatz 2**
**D-8000 München 2(DE)**

(72) Erfinder: **Daum, Rudolf**
**Danziger Strasse 2**
**D-8700 Würzburg(DE)**
Erfinder: **Reisenweber, Walter, Dipl.-Ing.(FH)**
**Im Weingarten 8**
**D-8744 Mellrichstadt(DE)**

(54) **Motorbefestigung.**

(57) Um auf fertigungstechnisch einfache Weise eine betriebssichere und paßgenaue Motorhalterung in einer äußeren Motoraufnahme mittels außen am metallenen Motorgehäuse anschweißbarer Halteelemente, insbesondere mit endseitiger Schraubbefestigung, erreichen zu können, sind erfindungsgemäß als Halteelemente nach dem Prinzip der Bolzen-Lichtbogenschweißung an das Motorgehäuse (1) anzuschweißende, jeweils eine Schweißelektrode bildende bolzenförmige Haltebügel (2;3;4) vorgesehen; zweckmäßigerweise sind die freien Enden der bolzenförmigen Halteelemente (2;3;4) direkt mit einem Schraubgewinde (23;33;34) versehen.

FIG 2

FIG 1

EP 0 360 910 A1

# Motorbefestigung

Die Erfindung bezieht sich auf eine Motorbefestigung mittels an einem metallenen Motorgehäuse anschweißbarer Halteelemente gemäß Oberbegriff des Anspruchs 1; eine derartige Motorbefestigung ist durch eine offenkundige Vorbenutzung allgemein bekannt.

Bei der vorgenannten bekannten Motorbefestigung sind zur Halterung eines Kraftfahrzeug-Axialventilators mit auf einem Rotorwellenende des elektrischen Antriebsmotors befestigten Axialventilatorflügel am Gehäuseumfang des Motorgehäuses nach Art eines Tragsterns drei Haltewinkel nach dem Prinzip des sogenannten Buckel-Widerstandsschweißens befestigt. An radial vom Gehäuse abstehenden freien Enden der Haltewinkel sind getrennte Schrauben axial durchgesteckt und mit ihrem Schraubenkopf mittels an den radial abstehenden Enden ausgebogenen Anschlägen formschlüssig festgelegt. Mit den freien Schraubenenden wird die gesamte Axialventilator-Antriebseinheit in einer kraftfahrzeugseitigen Motoraufnahme festgeschraubt.

Gemäß Aufgabe vorliegender Erfindung soll in fertigungstechnisch einfacherer Weise eine betriebssichere und paßgenaue Motorhalterung ermöglicht werden; dies gelingt bei einer Motorbefestigung der eingangs genannten Art durch die Lehre gemäß Anspruch 1; vorteilhafte Ausgestaltungen der Erfindung sind jeweils Gegenstand der Unteransprüche.

Die erfindungsgemäße Motorbefestigung erlaubt in einem einfachen Schweißvorgang unter Mitbenutzung des bolzenförmigen Haltebügels als eine Schweißelektrode die genaue und sichere Befestigung der Halteelemente am Motorgehäuse und gleichzeitig die vorherige bzw. zu stellen, sind dazu zuvor im Bereich der Schweißstellen nachträgliche einstückige Ausbildung der freien Haltebügelenden im Sinne einer Befestigung in einer äußeren Motoraufnahme, insbesondere die Anbringung eines Schraubgewindes auf die freien bolzenförmigen Haltebügelenden; dabei erübrigen sich besondere buckelartige Ausprägungen an den Halteelementen, die bei dem bekannten Buckel-Widerstandsschweißen als Schmelzmaterial benötigt werden sowie besondere auszuformende Anschläge zur Festlegung des Schraubenkopfes gesonderter in den Haltewinkel zu montierender Befestigungsschrauben.

Die Erfindung sowie weitere vorteilhafte Ausgestaltungen der Erfindung werden im folgenden anhand eines Ausführungsbeispieles in der Zeichnung näher erläutert; darin zeigen:

FIG 1 eine axiale Draufsicht auf ein Motorgehäuse mit an dessen Außenumfang nach Art eines Tragsterns befestigten bolzenförmigen Haltebügeln,

FIG 2 eine axiale Draufsicht auf die Anordnung gemäß FIG 1;

FIG 3 eine axial Draufsicht auf ein Motorgehäuse mit an dessen Umfang in bekannter Weise nach Art eines Tragsterns angeordneten Haltewinkeln mit gesondert eingesteckten und festgelegten Schrauben,

FIG 4 eine axiale Draufsicht auf die Anordnung gemäß FIG 3.

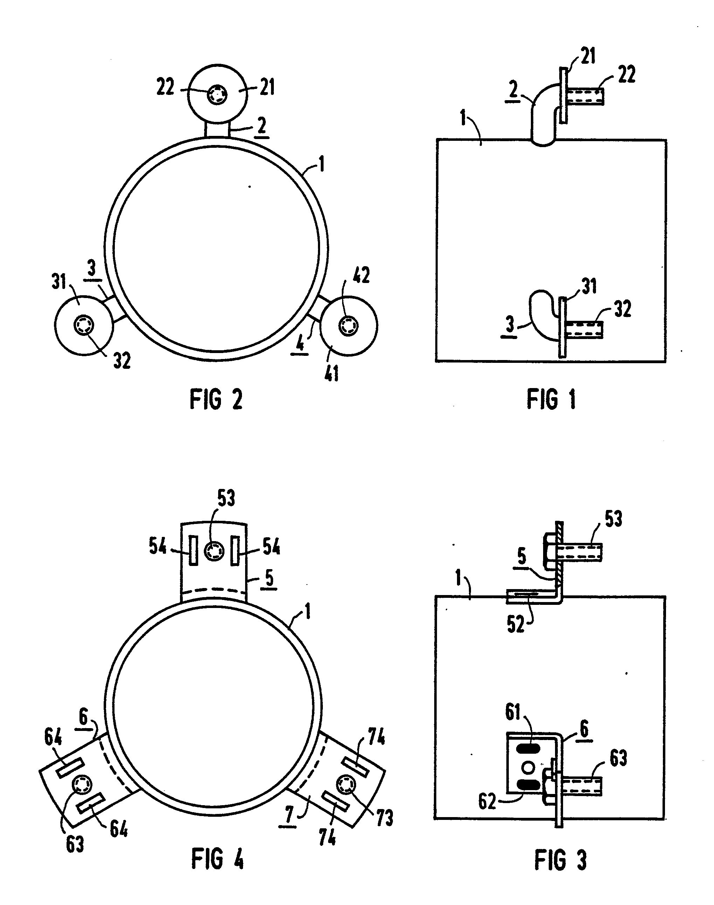

FIG 3,4 zeigen die bekannte Anordnung einer Motorbefestigung, die gemäß vorliegender Erfindung verbessert werden soll. Am Umfang eines gerollten und an den voreinanderliegenden Längskanten durch Schwalbenschwanzverbindungen formschlüssig schließenden Motorgehäuses 1 sind in Form eines Tragsterns drei flachwinkelige Halteelemente 5;6;7 angeordnet. Zur Befestigung der an der Umfangsfläche des Motorgehäuses 1 anliegenden Winkelflachteile sind jeweils zwei Buckel-Widerstandsschweißpunkte vorgesehen, von denen in FIG 3 die Buckel-Widerstandsschweißpunkte 61,62 des Halteelementes 6 und der Buckel-Widerstands schweißpunkt 51 des Halteelementes 5 sichtbar ist. Um bei dem Buckel-Widerstandsschweißen hinreichendes Schmelzmaterial zur Schweißverbindung zur Verfügung zu stellen, sind dazu zuvor im Bereich der Schweißstellen Ausprägungen mit hochgedrücktem Material in die flachwinkeligen Halteelemene (5;6;7) einzubringen. Zur Befestigung des Motors in einer äußeren Motoraufnahme über die flachwinkeligen Halteelemente 5;6;7 sind in die radial vom Motorgehäuse 1 abstehenden freien Enden der flachwinkeligen Halteelemente 5;6;7 Schrauben 53;63;73 durch entsprechende Schraubenlöcher eingesteckt und mit ihrem Schraubenkopf zwischen hochgebogenen Anschlagwinkeln 54;64;74 formschlüssig festgelegt. Die freien Schraubenenden verlaufen in radialem Abstand axial zum Motorgehäuse 1 und sind zur Schraubbefestigung in einer äußeren Motoraufnahme bestimmt.

FIG 1,2 zeigen die erfindungsgemäße Motorbefestigung mittels nach dem Prinzip der Bolzen-Lichtbogenschweißung ebenfalls nach Art eines Tragsterns am Umfang des Motorgehäuses 1 befestigter bolzenförmiger Haltebügel 2;3;4. Die bolzenförmigen Haltebügel 2;3;4 weisen nach einer Ausgestaltung der Erfindung eine jeweils winkelförmige Abbiegung mit einem im wesentlichen parallel zum Motorgehäuse 1 in radialem Abstand verlaufenden freien Ende und einem im wesentlichen radial zum Motorgehäuse 1 verlaufenden motorgehäuseseitigen Ende auf. Das motorgehäuseseitige Ende ist vor dem Schweißvorgang zweckmäßigerweise konisch verjüngt, derart daß das Material in diesem Bereich beim Schweißvorgang als Schmelzmaterial zur Verfügung gestellt werden kann.

Nach einer weiteren Ausgestaltung der Erfindung ist jeweils an dem freien Ende der bolzenförmigen Haltebügel 2;3;4 einstückig ein Schraubgewinde 23,33,43 entweder vor der Schweißung am oder nachträglich angebracht. Um auf einfache Weise eine axiale Lagefixierung bei der Befestigung des Motorgehäuses 1 über die im Tragstern angeordneten Haltebügel 2;3;4 gewährleisten zu können, ist jeweils eine an einer Schulter im Übergangsbereich zwischen dem einen mit dem Schraubgewinde 23,33,43 versehenen Ende und dem anderen motorgehäuseseitigen Ende der bolzenförmigen Haltebügel 2;3;4 anschlagende Anlagescheibe 24;34;44 vorgesehen.

## Ansprüche

1. Motorbefestigung mittels an einem metallenen Motorgehäuse (1) anschweißbarer Halteelemente, **dadurch gekennzeichnet**, daß als Halteelemente nach dem Prinzip der Bolzen-Lichtbogenschweißung an das Motorgehäuse (1) anzuschweißende, jeweils eine Schweißelektrode bildende bolzenförmige Haltebügel (2;3;4) vorgesehen sind.

2. Motorbefestigung nach Anspruch 1, **gekennzeichnet** durch eine jeweils winkelförmige Abbiegung der bolzenförmigen Halteelemente (2;3;4) mit einem im wesentlich parallel und in Abstand zum Motorgehäuse (1) verlaufenden freien Ende und einem im wesentlichen radial zum Motorgehäuse verlaufenden motorgehäuseseitigen Ende.

3. Motorbefestigung mit einem an einem freien Ende des Halteelementes vorgesehenen Schraubgewinde nach Anspruch 1 und/oder 2, **gekennzeichnet** durch ein jeweils einstückig auf die bolzenförmigen Haltebügel (2;3;4) aufgebrachtes Schraubgewinde (23;33;43).

4. Motorbefestigung nach Anspruch 3, **gekennzeichnet** durch jeweils eine an einer Schulter des bolzenförmigen Haltebügels (2;3;4) anliegenden Anlagescheibe (24;34;44) im Übergangsbereich zwischen dem einen mit dem Schraubgewinde (23;33;43) versehenen Ende und dem anderen motorgehäuseseitigen Ende der bolzenförmigen Haltebügel (2;3;4).

FIG 2

FIG 1

FIG 4

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 203 999 (OMARK) * Seite 10, Zeile 20 - Seite 12, Zeile 17; Seite 19, Zeilen 1-20; Figuren 1,2 * | 1,2 | H 02 K 5/00 H 02 K 15/14 |
| A | US-A-4 161 812 (LITCH) * Spalte 12, Zeile 37 - Spalte 13, Zeile 35; Figuren 1,2,9-11 * | 1,2 | |
| A | FR-A-1 374 315 (BIRAGHI) * Seite 4, linke Spalte, Zeilen 4-16; Figuren 1-3 * | 1 | |
| A | US-A-1 410 421 (STEELE et al.) * Seite 9, Zeilen 10-25,71-80; Figuren 2,5,11,13-15,17 * | 3,4 | |

| RECHERCHIERTE SACHGEBIETE (Int. Cl.4) |
|---|
| H 02 K B 23 K |

Der vorliegende Recherchenbericht wurde für alle Patentansprüche erstellt

| Recherchenort | Abschlußdatum der Recherche | Prüfer |
|---|---|---|
| DEN HAAG | 10-05-1989 | TIO K.H. |